# EUROPEAN PATENT APPLICATION

(11) **EP 1 918 695 A1**
(43) Date of publication of application: **07.05.2008**
(21) Application number: 07119685.1
(22) Date of filing: 30.10.2007
(51) Int. Cl.: G01N 21/77, G01N 21/55

(54) **Optical waveguide sensor devices and methods for making and using them**

(30) Priority: 31.10.2006 US 863778 P; 26.10.2007 US 925071
(71) Applicant: Honeywell International Inc., Morristown, NJ 07962 (US)
(72) Inventor: Keyser, Thomas, Plymouth, MN 55446 (US); Hughes, Grenville, Wayzata, MN 55391 (US)
(74) Representative: Buckley, Guy Julian

(57) **Abstract**

The present invention relates to optical waveguide sensor devices. One aspect of the present invention is an optical waveguide sensor device, comprising a substrate; and a device layer disposed on the substrate. The device layer includes one or more sensing optical waveguides, each sensing optical waveguide having a core formed from a polymer material or an organic/silicate hybrid material; and one or more inert inorganic optical waveguides operatively coupled to at least one of the sensing optical waveguides. Another aspect of the present invention is an optical waveguide sensor device, comprising a substrate; and a device layer disposed on the substrate. The device layer includes one or more sensing optical waveguides, each sensing optical waveguide having a core formed from a polymer material or an organic/silicate hybrid material; and one or more electronic devices operatively coupled to at least one of the sensing optical waveguides. The present invention can provide devices having higher sensitivity, smaller size and/or more convenient fabrication than those provided by the prior art.

## Description

### CROSS-REFERENCE TO RELATED APPLICATIONS

This application claims priority to U.S. Provisional Patent Application Serial No. 60/863,778, filed October 31, 2006, which is hereby incorporated herein by reference.

### BACKGROUND OF THE INVENTION

### 1. Field of the Invention

The present invention relates generally to sensor devices. The present invention relates more particularly to optical waveguide-based sensor devices suitable for use as chemical and biochemical sensors.

### 2. Technical Background

The modem world is replete with chemical and biochemical threats to the health and safety of its people. Substances such as explosives, nerve agents and poisons, and organisms such as anthrax and botulism have been implicated in warfare and terrorism. Food and water can be contaminated with microbes such as salmonella, coliform and E. coli and a wide variety of chemicals. Even the environment itself is polluted with the detritus of over a hundred years of industrial society. Accordingly, a need has arisen for the accurate sensing and monitoring of chemical and biochemical agents.

Many types of sensors have been developed to detect a variety of chemical and biochemical agents. A very common current method of sensing and monitoring chemical agents is mass spectrometry. This method typically uses relatively large monitored equipment that is not amenable to situations where portable monitoring devices are needed. For example, mass spectrometers are commonly used in an airport setting where items passing through security may be swabbed and the presence of controlled or banned substances is sensed. The mass spectrometer used is typically a permanent or semi-permanent sensing unit and is monitored by security personnel. Mass spectrometer-based systems are also difficult to use in distributed and in-process sensing applications.

Of growing interest is the use of optical sensing devices to sense and monitor chemical and biochemical agents of interest. Many examples of such devices rely on the interaction of an optical signal propagating within an optical waveguide with the environment surrounding the waveguide. However, current waveguide-based devices often lack sensitivity sufficient to detect very low levels of chemical and biochemical agents. Moreover, many current optical waveguide-based devices are difficult to fabricate and assemble, and suffer from relatively large size.

### SUMMARY OF THE INVENTION

One aspect of the present invention is an optical waveguide sensor device, comprising:
a substrate; and
a device layer disposed on the substrate, the device layer comprising
   one or more sensing optical waveguides, each sensing optical waveguide having a core formed from a polymer material or an organic/silicate hybrid material; and
   one or more inert inorganic optical waveguides operatively coupled to at least one of the sensing optical waveguides.

Another aspect of the present invention is an optical waveguide sensor device, comprising:
a substrate; and
a device layer disposed on the substrate, the device layer comprising
   one or more sensing optical waveguides, each sensing optical waveguide having a core formed from a polymer material or an organic/silicate hybrid material; and
   one or more electronic devices operatively coupled to at least one of the sensing optical waveguides.

Another aspect of the present invention method of making an optical waveguide sensor device, comprising:
providing a substrate; and
forming a device layer disposed on the substrate, the device layer comprising
   one or more sensing optical waveguides, each sensing optical waveguide having a core formed from a polymer material or an organic/silicate hybrid material; and
   one or more inert inorganic optical waveguides operatively coupled to at least one of the sensing optical waveguides.

Another aspect of the present invention method of making an optical waveguide sensor device, comprising:
providing a substrate; and
forming a device layer disposed on the substrate, the device layer comprising
   one or more sensing optical waveguides, each sensing optical waveguide having a core formed from a polymer material or an organic/silicate hybrid material; and
   one or more electronic devices operatively coupled to at least one of the sensing optical waveguides.

Another aspect of the present invention is a method of detecting an analyte, comprising:
providing an optical waveguide sensor device comprising
   a substrate; and
   a device layer disposed on the substrate, the device layer comprising
   one or more sensing optical waveguides, each sensing optical waveguide having a core formed from a polymer material or an organic/silicate hybrid material; and
   one or more inert inorganic optical waveguides operatively coupled to at least one of the sensing optical waveguides;
passing an optical signal through at least one of the sensing optical waveguides; and
detecting the optical signal after it emerges from the at least one sensing optical waveguide.

Another aspect of the present invention is a method of detecting an analyte, comprising:
providing an optical waveguide sensor device comprising
   a substrate; and
   a device layer disposed on the substrate, the device layer comprising
   one or more sensing optical waveguides, each sensing optical waveguide having a core formed from a polymer material or an organic/silicate hybrid material; and
   one or more electronic devices operatively coupled to at least one of the sensing optical waveguides;
passing an optical signal through at least one of the sensing optical waveguides; and
detecting the optical signal after it emerges from the at least one sensing optical waveguide.

The devices and methods of the invention can result in a number of advantages over prior art devices and methods. For example, in certain aspects of the invention, the optical waveguide devices and methods using them can provide higher sensitivity than prior art optical waveguide devices. Moreover, the level of integration achieved in certain aspects of the present invention can allow the fabrication of smaller, more functional and/or less expensive devices than those found in the prior art.

### BRIEF DESCRIPTION OF THE DRAWINGS

FIG. 1 is a top schematic view of a Mach-Zehnder optical waveguide sensor device according to one embodiment of the invention;

FIG. 2 is a side cross-sectional schematic view along one of the waveguide arms of the optical waveguide sensor device of FIG. 1;

FIG. 3 is a top schematic view of a ring resonator optical waveguide sensor device according to one embodiment of the invention;

FIG. 4 is an end-on cross-sectional schematic view of the optical waveguide sensor device of FIG. 3.

FIG. 5 is a top schematic view of an optical waveguide sensor device having a sensing optical waveguide in a different plane than an inert inorganic optical waveguide according to one embodiment of the invention;

FIG. 6 is an end-on cross-sectional schematic view of the optical waveguide sensor device of FIG. 3.

FIG. 7 is an side cross-sectional schematic view of another optical waveguide sensor device having a sensing optical waveguide in a different plane than an inert inorganic optical waveguide according to one embodiment of the invention;

FIG. 8 is a top schematic view of an optical waveguide sensor device configured to provide an absorbance measurement according to one embodiment of the invention;

### DETAILED DESCRIPTION OF THE INVENTION

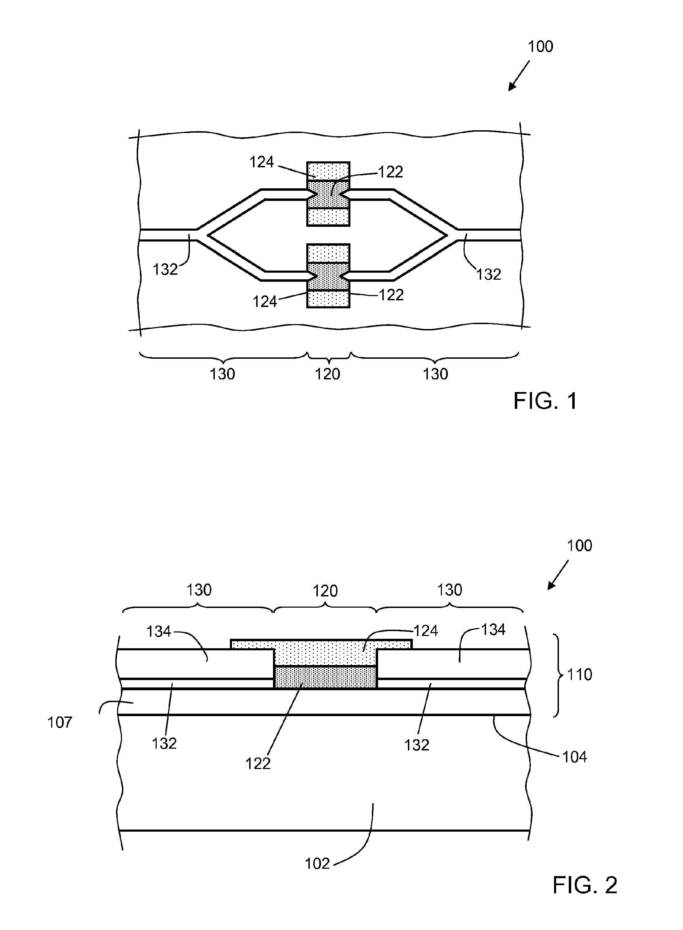

One aspect of the invention is an optical waveguide sensor device. One embodiment of such a device is shown in top schematic view in FIG. 1 and in side cross-sectional schematic view along one of the waveguide arms in FIG. 2. Optical waveguide sensor device 100 includes a substrate 102; and a device layer 110 disposed on the upper surface 104 of the substrate 102. The device layer 110 includes one or more sensing optical waveguides 120, each of which is formed from a polymer material system or an organic/silicate hybrid material system. The device layer also includes one or more inert inorganic optical waveguides 130 operatively coupled to at least one of the sensing optical waveguides 120.

The substrate can be any substrate suitable for use in optical waveguide devices. For example, the substrate can be a silicon substrate, a glass substrate, or a plastic substrate. In one embodiment of the invention, the substrate and the device layer are formed from the bulk wafer and the insulator layer of a silicon-on-insulator structure. For example, as shown in FIG. 2, the substrate 102 is a silicon wafer, which is provided with a silicon oxide or silicon oxynitride buffer layer 107 on its upper surface 104. In the embodiment shown in FIG. 2, the buffer layer serves as the lower cladding of the sensing optical waveguides 120 and the inert inorganic optical waveguides 130.

The device layer is disposed on the upper surface of the substrate. The device layer 110 can be disposed directly on the upper surface 104 of the substrate 102, as shown in FIG. 2. Alternatively, one or more intermediate layers can be disposed between the device layer and the upper surface of the substrate. In certain embodiments of the invention, however, the device layer is within 10 microns, or even within 3 µm of the upper surface of the substrate. As described below, the device layer can include waveguides in one or more horizontal planes with respect to the substrate surface.

The device layer includes at least one sensing optical waveguide. For example, in the embodiment shown in FIG. 2, sensing optical waveguide 120 includes core 122 and upper cladding 124. The lower cladding of sensing optical waveguide 120 is provided by the buffer layer 107 formed on the upper surface 104 of substrate 102. In other embodiments of the invention, a separate lower cladding layer is provided between the core of the sensing optical waveguide and the substrate.

Each sensing optical waveguide has a core that is formed from a polymer material or an organic/silicate hybrid material. Many polymer materials and organic/silicate hybrid materials are known to change their optical properties in response to analytes of interest. For example, polymeric materials change refractive index when exposed to vapors or aqueous solutions of organic analytes such as hydrocarbons, ether and ester-based solvents, and halocarbons. The magnitude of the refractive index change depends on the concentration of the organic analyte and the refractive index difference between the polymer and the analyte. Certain polymeric materials also experience index and/or absorption changes upon interaction of an analyte through electronic interactions with the polymer or a dopant. Examples of the use of polymeric materials in chemical sensing are described in G. Gauglitz and J. Ingenhoff, "Integrated optical sensors for halogenated and non-halogenated hydrocarbons," Sensors and Actuators B, 11 (1993) 207-212; A. Ksendozov et al., "Integrated optics ring-resonator chemical sensor with polymer transduction layer," Electronics Letters, 8th January 2004, Vol. 40 No. 1; A. Pyayt et al., "Optical micro-resonator chemical sensor," Proc. of SPIE, vol. 6556, 65561D (2007); H. Hisamoto and K. Suzuki, "Ion-selective optodes: current developments and future prospects," Trends in Analytical Chemistry, 18 (1999) 513-524; and D.P. Campbell et al., "Polymers: The Key Ingredient in Waveguide Chemical Sensors," Polymer Preprints, August 1998, p. 1085, each of which is hereby incorporated herein by reference. Organic/silicate hybrid materials include organically-modified silicate materials (e.g., the condensation reaction products of trialkoxysilanes) as well as porous silicates doped with organic or biomolecular species that interact with an analyte of interest. Examples of the use of organic/silicate hybrid materials in sensing applications are described in, for example, B.D. MacCraith et al., "Sol-gel coatings for optical chemical sensors and biosensors," Sensors and Actuators B, 29 (1995) 51-57; B.D. MacCraith et al., "Optical Chemical Sensors based on Sol-Gel Materials: Recent Advances and Critical Issues," Chemistry and Materials Science, 8 (1997) 1053-1061; U.S. Patent 5,774,603; and U.S. Patent Application Publication no. 2007/0059211; E.L. Chronister, "Ultrafast photochromic sol-gel glasses & fiber optic sensors," Final Report, Grant No. DAAL03-92-G-0399, Accession No. ADA332537, August 18, 1997, each of which is hereby incorporated herein by reference. The upper cladding of the sensing optical waveguide can also be made from a sensing material (modified to provide the desired refractive index contrast). The upper cladding of the sensing optical waveguide can also be made from an inert polymer material or silicate (e.g., sol-gel derived) material of an appropriate refractive index. In still further embodiments of the invention, the waveguide core is not clad by a separate upper cladding layer, but rather is confined by the relatively low refractive index of the environment to be sensed (e.g., air or water). Any upper cladding of the sensing optical waveguide should allow the analyte to reach the core of the sensing optical waveguide.

The device layer also includes at least one inert inorganic optical waveguide coupled to at least one of the sensing organic waveguides. For example, in the embodiment shown in FIGS. 1 and 2, inert inorganic optical waveguides 130 are coupled to the sensing optical waveguides 120. For example, as shown in FIG. 1, the inert inorganic optical waveguides are tapered to provide more efficient coupling between them and the sensing optical waveguides. In other embodiments of the invention the sensing optical waveguides can be tapered, or the waveguides can simply be butt-coupled. The inert inorganic optical waveguides can be made from a variety of materials. For example, the inert inorganic optical waveguides can have a core made from silicon, silicon nitride, silicon oxynitride, or a silicon dioxide based material (e.g., doped or undoped SiO₂). Other materials, such as III-IV semiconductors, can be used to form the cores of the inert inorganic optical waveguides. The inert inorganic optical waveguide can have upper and lower claddings made from any number of materials, including silicon nitride, silicon oxynitride and silicon dioxide-based materials. As mentioned above, the lower cladding of the inert inorganic optical waveguide can be provided by the insulator layer of a silicon-on-insulator substrate. For example, in the embodiment shown in FIGS. 1 and 2, the inert inorganic optical waveguides 130 have a core 132 formed from the silicon layer of a silicon-on-insulator structure, and have an upper cladding 134 formed from a deposited layer of a silicon dioxide-based material. In the embodiment of FIGS. 1 and 2, the inert inorganic optical waveguides have a higher index contrast than do the sensing optical waveguides, and are therefore smaller in cross-section than the sensing optical waveguides. In the embodiment shown in FIG. 2, the upper cladding layer 124 of sensing optical waveguide 120 overlaps the upper cladding layer 134 of inert inorganic optical waveguide 130; as long as the upper cladding layer of the inert inorganic optical waveguides is thick enough to substantially bury the evanescent wave, this overlap will have little effect on the optical characteristics of the inert inorganic optical waveguides.

Inert inorganic optical waveguides can be combined in virtually any combination with sensing optical waveguides to provide a wide variety of optical waveguide sensor devices.
By using inert inorganic optical waveguides for a substantial portion of the device, performance issues inhering in the relatively high loss of sensing optical waveguides can be mitigated. Because extremely sensitive polymeric or organic/silicate hybrid materials can be used, the sensing optical waveguides can be quite short. Moreover, precise fabrication techniques can be used to make the sensitive coupling and splitting structures of the device from inert inorganic optical waveguides. Inert inorganic optical waveguides (especially silicon optical waveguides) can also provide relatively tight turning radii, and therefore relatively small devices. Accordingly, combination of inert inorganic optical waveguides and sensing optical waveguides can provide advantages over devices formed from inert inorganic optical waveguides or sensing optical waveguides alone.

The optical waveguide sensor device shown in FIG. 1 is configured as a Mach-Zehnder interferometer, which senses the relative change in the difference between the effective refractive indices of its two arms. In the device of FIG. 1, both arms of the interferometer include a section of sensing optical waveguide; one of these sensing optical waveguides is allowed to interact with the environment, and the other is not. For example, an inert, impermeable cover layer can be formed over the top of the device, with a window left open over one of the sensing optical waveguides but not the other. Index changes due to temperature fluctuations will be experienced equally by both arms of the interferometer, and effectively canceled out. Index changes due to interaction with the analyte will only be experienced in the sensing optical waveguide that is exposed to the atmosphere. In other embodiments of the invention, one arm of a Mach-Zehnder interferometer has a section of sensing optical waveguide that is sensitive to a given analyte (e.g., through an indicator, electronic interactions, or molecular imprinting interactions, or through index changes due to dissolution of the analyte into the sensing optical waveguide), while the other has a section of a reference waveguide formed from materials similar to those of the sensing optical waveguide, but without the sensitivity to the analyte. For example, the core of the sensing optical waveguide can be formed from a polymeric material doped with an indicator; and the reference waveguide can be formed from the same polymeric material but without the indicator. The sensing optical waveguide will respond to the analyte very differently than the reference waveguide, but will respond similarly to fluctuations in temperature, humidity, and interferent species. In still other embodiments of the invention, one arm of the interferometer includes a section of sensing optical waveguide, while the other is formed only from inert inorganic optical waveguide.

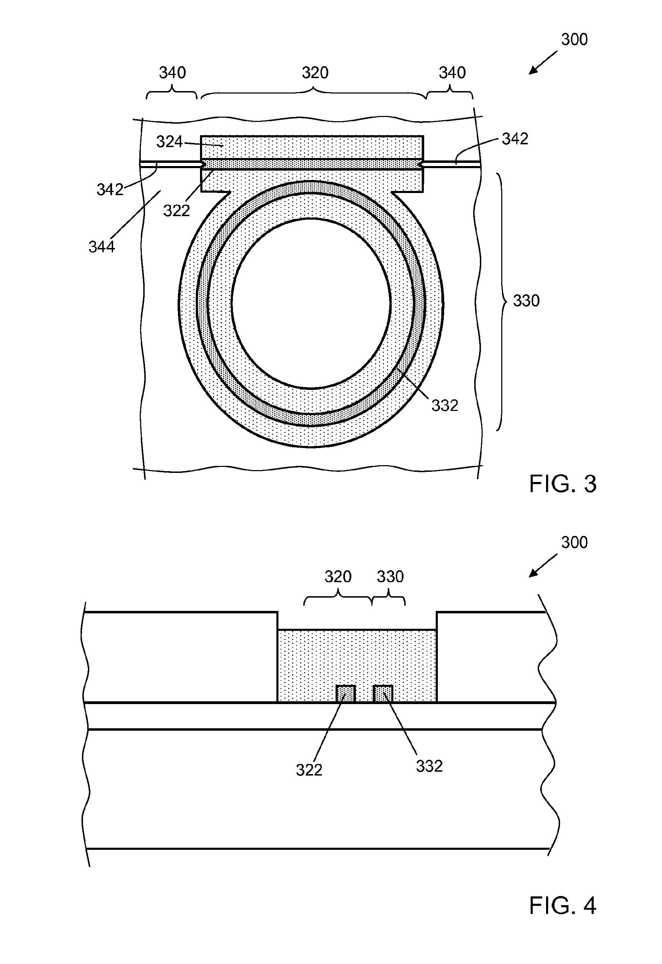

The optical waveguide sensor device can have a variety of architectures. For example, as described above, the optical waveguide sensor device can have a Mach-Zehnder interferometer architecture. In one embodiment of the invention, shown in top schematic view in FIG. 3 and in end-on cross-sectional schematic view in FIG. 4, the optical waveguide sensor device has a ring resonator structure. Optical waveguide sensor device 300 includes a straight sensing optical waveguide 320 and a ring sensing optical waveguide 330. Ring sensing optical waveguide 330, having core 332, is the ring resonator, to which straight sensing optical waveguide 320 is evanescently coupled. Inert inorganic optical waveguides 340, having cores 342 and claddings 344, are coupled to the sensing optical waveguide to lead an optical signal to and from the sensing part of the device. In the embodiment shown in FIG. 3, the cores 322 and 332 of the sensing optical waveguides are clad by a polymeric or organic/silicate hybrid cladding 324. In the embodiment shown in FIG. 4, the upper cladding 324 of the sensing optical waveguide 320 does not flow over the top of the cladding 344 of the inert inorganic optical waveguide, but rather remains within a trench formed in the inert inorganic optical waveguide part of the device.

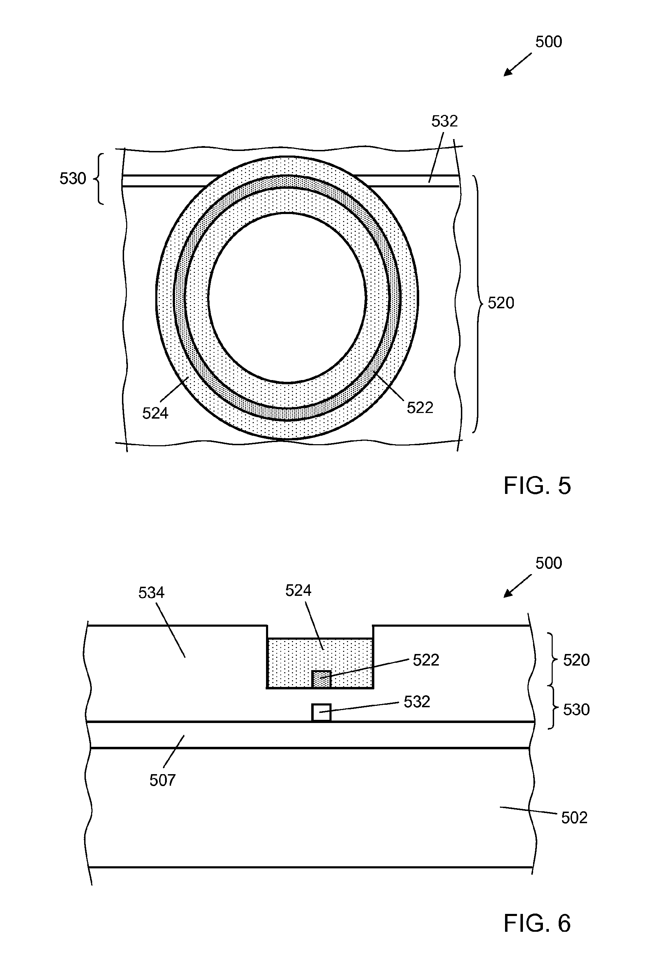

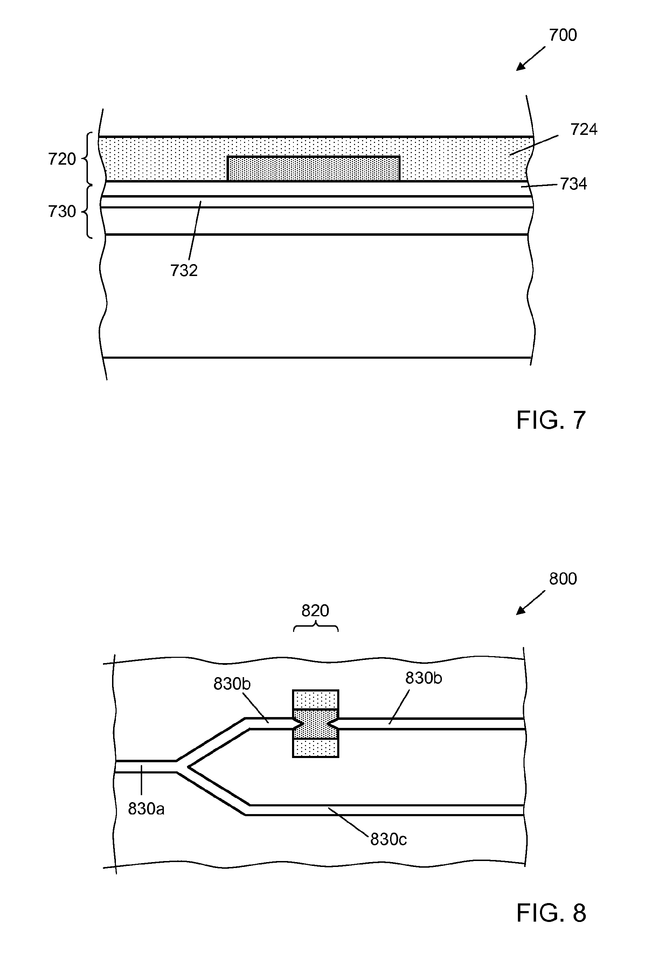

In certain embodiments of the invention, a sensing optical waveguide is formed in a different horizontal plane (i.e., with respect to the substrate) than the inert inorganic optical waveguide(s). In such embodiments, the coupling between the sensing optical waveguide and the inert inorganic optical waveguide can be evanescent in nature. For example, in the optical waveguide sensor device 500 shown in top schematic view in FIG. 5 and in end-on cross-sectional schematic view in FIG. 6, the optical waveguide sensor device 500 is configured as a ring resonator in which the ring is formed from the sensing optical waveguide 520 and the inert inorganic optical waveguide 530 is coupled thereto. The core 532 of inert inorganic optical waveguide 530 is formed directly on the buffer layer 507 of the substrate 502, and the core 522 and upper cladding 524 of sensing optical waveguide 520 are formed in a trench on the upper cladding 534 of the inert inorganic optical waveguide. In the embodiment of FIGS. 5 and 6, the upper cladding is relatively thick; a trench is formed in the region of the inert inorganic optical waveguide core 532 in order to thin it out to allow coupling with the sensing optical waveguide 520. However, in other embodiments of the invention, for example in the optical waveguide sensor device 700 shown in side cross-sectional schematic view in FIG. 7, the upper cladding 734 of the inert inorganic optical waveguide 730 can be uniformly thin; the upper cladding 724 of the sensing optical waveguide 720 provides the remainder of the optical isolation of the inert inorganic optical waveguide core 732.

In other embodiments of the invention, the optical waveguide sensor device is configured to provide an absorbance measurement. For example, in the optical waveguide sensor device 800 shown in top schematic view in FIG. 8, the sensing optical waveguide 820 is coupled to inert inorganic optical waveguides 830. The sensing optical waveguide is selected to change its absorbance when it interacts with the analyte of interest (e.g., using a colorimetric indicator). In some embodiments, the device includes a reference arm. For example, as shown in FIG. 8, the inert inorganic optical waveguide 830a splits to form inert inorganic optical waveguides 830b, which are coupled to the sensing optical waveguide, and 830c, which forms the reference arm of the device. The use of a reference arm can allow any fluctuations in the optical source to be cancelled out of the measurement. Of course, as described above with reference to the Mach-Zehnder interferometer of FIGS. 1 and 2, the reference arm can include a reference optical waveguide made from similar materials as the sensing optical waveguide (e.g., but lacking the colorometric indicator) or a sensing optical waveguide sealed off from the environment in order to provide better handling of changes in optical characteristics of the sensing waveguide arising from interferents and temperature fluctuations.

In certain embodiments of the invention, a thin, chemically inert layer is provided over the device in order to protect the underlying materials from attack. Openings are provided over the sensing optical waveguides, for example using etching or lift-off procedures. A sheet of protective material (e.g., glass, plastic) having openings formed therein may also provide the thin, chemically inert layer; it can be glued or otherwise affixed to the top of the device. Protective layers with windows could, for example, be prepared over "active" sol-gel (SiO₂) sensing waveguides by applying a polyimide layer and patterning selectively with an oxygen plasma or photo-lithographically, if an photo-sensitive polyimide is used. Photo-sensitive polyimides or BCBs could also be used to selectively expose regions of organic sensing waveguides.

According to one embodiment of the invention, the device layer of the optical waveguide sensor device also includes one or more electronic devices. The electronic devices can be operatively coupled to the sensing optical waveguides, both directly or through the intermediacy of one or more of the inert inorganic optical waveguides. The electronic devices can also be operatively coupled to one or more of the inert inorganic optical waveguides. For example, an optical detector can be included in the device layer. Silicon and/or germanium optical detectors can be especially useful when visible or near-infrared light is used in the optical waveguide sensor device. In other embodiments of the invention, the device layer includes a modulator coupled to at least one of the inert inorganic optical waveguides and/or one of the sensing optical waveguides. A silicon-on-insulator substrate can be used to allow silicon-based electronic devices to be built onto the device; when the inert inorganic optical waveguides are not to be formed from silicon, the silicon layer of the silicon-on-insulator structure can be etched away to leave the insulator layer as a platform for making the inert inorganic optical waveguides. Electronic devices that can be used in the devices of the present invention include, for example, amplifiers, signal conditioning and interfacing circuits, and opto-electronic devices such as detectors, phase modulators and switches.

The optical waveguide sensor devices of the present invention can also include an optical source operatively coupled to the sensing optical waveguide (e.g., directly or through an inert inorganic optical waveguide). The optical source provides an optical signal used to interrogate the waveguide structure. It can be provided through an optical fiber, or coupled into one of the waveguides using a prism, a grating or a lens, or through butt-coupling. The optical source can be of a wavelength or wavelength range that overlaps with the responsive wavelengths of the sensing optical waveguide (i.e., the wavelengths over which the sensing optical waveguide changes its optical properties in response to an analyte), and can for example operate in the visible, near-infrared or infrared wavelength ranges. It can be, for example, a laser (e.g., a fixed-wavelength laser or a scanning laser), or a broadband light source.

The optical waveguide sensor devices of the present invention can also include an optical detector operatively coupled to the sensing optical waveguide (e.g., directly or through an inert inorganic optical waveguide). As described above, in certain embodiments of the invention the detector is provided in the device layer itself. In other embodiments of the invention, the detector is provided in a discrete device or on a discrete chip. The detector can operate at a fixed wavelength or wavelength range, or scan through wavelengths to provide spectrographic information. Similarly, a detector array can be used with a grating or prism to provide spectrographic information, or to monitor specific spectral regions. The detector can be coupled to the waveguides of the device through an optical fiber, a prism or a grating, or through butt-coupling.

The optical waveguide sensor devices of the present invention can include multiple sensing optical waveguides made from multiple materials. The use of multiple sensing optical waveguides in parallel can allow interferent signals to be accounted for, or can allow for the simultaneous sensing of many different analytes.

Another aspect of the invention is a method of making an optical waveguide sensor device. The method includes providing a substrate, and forming a device layer disposed on the surface of the substrate. The device layer includes one or more sensing optical waveguides, each having a core formed from a polymer material or an organic/silicate hybrid material. The device layer also includes one or more inert inorganic optical waveguides operatively coupled to at least one of the sensing waveguides. Standard integrated optics fabrication techniques can be used to make the inert inorganic optical waveguides. Vapor deposition, photolithographic, etching, lift-off and related techniques can be used to make waveguides from silicon, silicon oxide materials, silicon nitride and silicon oxynitride materials. These standard techniques can also be used to make the sensing optical waveguides. Photolithographic methods, such as those described in U.S. Patent 7,011,932, can also be used to make sensing optical waveguides. The methods according to this aspect of the invention can be used to make the optical waveguide sensor devices described above.

In one embodiment of the invention, the inert inorganic optical waveguides are formed before the sensing optical waveguides. In this embodiment of the invention, relatively high temperatures and aggressive chemistries can be used to form the inert inorganic optical waveguides, without worrying about their effect on any organic or biochemical species in sensing optical waveguides.

In one embodiment of the invention, the device layer further includes one or more electronic devices. A silicon-on-insulator substrate can be used to form the substrate and electronic devices. Standard integrated electronic device fabrication methods, such as ion implantation, physical and chemical deposition, chemical-mechanical polishing and patterning techniques, can be used to make the electronic devices.

Another aspect of the invention is a method of detecting an analyte. The method comprises providing an optical waveguide sensor device comprising a substrate and a device layer disposed on the substrate. The device layer includes one or more sensing waveguides, each having a core formed from a polymer material or an organic/silicate hybrid material responsive to the analyte. The polymer material or the organic/silicate hybrid material can be responsive to the analyte through, for example, index changes due to dissolution or diffusion of the analyte in the material, electronic interactions with the material or interactions with an indicator doped in the material. The device layer also includes one or more inert inorganic optical waveguides operatively coupled to at least one of the sensing optical waveguides.
The optical waveguide sensor devices described above can be used in the method according to this aspect of the invention.

The method further includes passing an optical signal through at least one of the sensing optical waveguides. The optical signal is within a wavelength range that overlaps the responsive wavelengths of the one or more sensing optical waveguides. The optical signal can be provided by using an optical source as described above with respect to the optical waveguide sensor devices of the present invention. The method also includes detecting the optical signal after it emerges from the at least one sensing optical waveguide. The detectors described above with respect to the optical waveguide sensor devices of the present invention can be used to detect the optical signal. Depending on the nature of the optical signal and the configuration of the optical waveguide sensor device, the detected optical signal can take many forms, including a spectrograph, an interferogram, a position on a peak, or a position within a continuum of absorbances. Depending on its character, electronic, software, or manual processing can be used to correlate the detected optical signal with the concentration of the analyte.

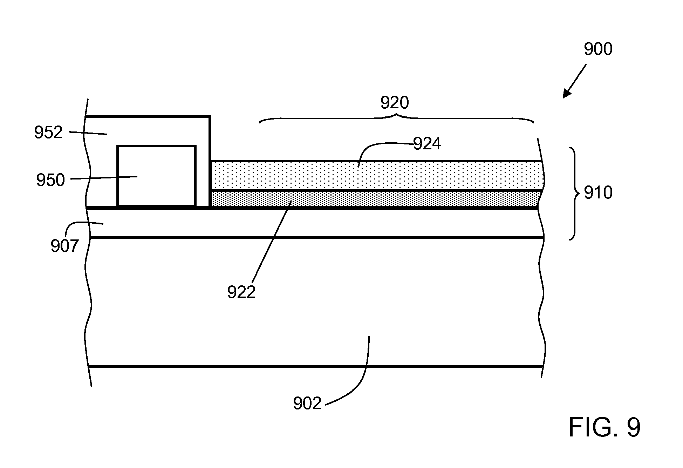

Another aspect of the invention is an optical waveguide sensor device comprising a substrate and a device layer disposed on the substrate. The device layer includes one or more sensing optical waveguides, each having a core made from a polymer material or an organic/silicate hybrid material. The device layer also includes one ore more electronic devices operatively coupled to at least one of the sensing optical waveguides. An example of a device according to this aspect of the invention is shown in side cross-sectional view in FIG. 9. Optical waveguide device 900 includes substrate 902 and device layer 910. The device layer includes buffer layer 907, and sensing optical waveguide 920, which includes core 922 and upper cladding 924. The lower cladding of the optical waveguide 920 is provided by the buffer layer 907. The device layer further includes electronic device 950, which is protected by an oxide layer 952 and butt-coupled to the sensing optical waveguide 922. The substrate, sensing optical waveguide, and electronic device may be substantially as described hereinabove.

Another aspect of the invention is a method of making an optical waveguide sensor device. The method includes providing a substrate, and forming a device layer disposed on the surface of the substrate. The device layer includes one or more sensing optical waveguides, each having a core formed from a polymer material or an organic/silicate hybrid material. The device layer also includes one or more electronic devices operatively coupled to at least one of the sensing waveguides. The electronic devices can be coupled directly to the sensing waveguides. Alternatively, the electronic devices can be indirectly coupled to the sensing waveguides, for example through the intermediary of inert waveguides, or through free space or a bulk material, optionally using lenses and/or mirrors. Standard integrated electronics fabrication techniques can be used to make the electronic devices. Standard integrated optics fabrication techniques, such as vapor deposition, photolithographic, etching, lift-off and related techniques, can be used can also be used to make the sensing optical waveguides. Photolithographic methods, such as those described in U.S. Patent 7,011,932, can also be used to make sensing optical waveguides. The methods according to this aspect of the invention can be used to make the optical waveguide sensor devices described above.

Another aspect of the invention is a method of detecting an analyte. The method comprises providing an optical waveguide sensor device comprising a substrate and a device layer disposed on the substrate. The device layer includes one or more sensing waveguides, each having a core formed from a polymer material or an organic/silicate hybrid material responsive to the analyte. The polymer material or the organic/silicate hybrid material can be responsive to the analyte through, for example, index changes due to dissolution of the analyte in the material, electronic interactions with the material or interactions with an indicator doped in the material. The device layer also includes one or more electronic devices operatively coupled to at least one of the sensing optical waveguides. The optical waveguide sensor devices described above can be used in the method according to this aspect of the invention.

The method further includes passing an optical signal through at least one of the sensing optical waveguides. The optical signal is within a wavelength range that overlaps the responsive wavelengths of the one or more sensing optical waveguides. The optical signal can be provided by using an optical source as described above with respect to the optical waveguide sensor devices of the present invention. The method also includes detecting the optical signal after it emerges from the at least one sensing optical waveguide. The detectors described above with respect to the optical waveguide sensor devices of the present invention can be used to detect the optical signal. Depending on the nature of the optical signal and the configuration of the optical waveguide sensor device, the detected optical signal can take many forms, including a spectrograph, an interferogram, a position on a peak, or a position within a continuum of absorbances or absorption peaks. Depending on its character, electronic, software, or manual processing can be used to correlate the detected optical signal with the concentration of the analyte. The methods according to this aspect of the invention can be practiced analogously to the methods using optical waveguide sensor devices including both sensing optical waveguides and inert inorganic optical waveguides, described above.

Although various specific embodiments of the present invention have been described herein, it is to be understood that the invention is not limited to those precise embodiments and that various changes or modifications can be effected therein by one skilled in the art without departing from the scope of the claimed invention.

## Claims

1. An optical waveguide sensor device, comprising:
a substrate;
a device layer disposed on the substrate, the device layer comprising
one or more sensing optical waveguides, each sensing optical waveguide having a core formed from a polymer material or an organic/silicate hybrid material; and
one or more inert inorganic optical waveguides operatively coupled to at least one of the sensing optical waveguides.

2. The optical waveguide sensor device of claim 1, wherein the inert inorganic optical waveguides are fabricated from silicon, and are coupled to the sensing optical waveguides through waveguide tapers.

3. The optical waveguide sensor device of claim 2, wherein the inert inorganic optical waveguides are fabricated from silicon, silicon nitride, silicon oxynitride or a silicon dioxide based material.

4. The optical waveguide sensor device of claim 1, wherein the configuration of the waveguides is that of a Mach-Zehnder interferometer; a ring resonator; or a relative absorbance measurement.

5. The optical waveguide sensor device of claim 1, wherein the sensing optical waveguide is formed in a different vertical plane than the inert inorganic optical waveguides.

6. The optical waveguide sensor device of claim 1, further comprising an optical source operatively coupled to the sensing optical waveguide.

7. The optical waveguide sensor device of claim 1, further comprising an optical detector operatively coupled to the sensing optical waveguide.

8. A method of making an optical waveguide sensor device, comprising:
providing a substrate;
forming a device layer disposed on the surface of the substrate, the device layer
comprising
one or more sensing optical waveguides, each sensing optical waveguide having a core formed from a polymer material or an organic/silicate hybrid material; and
one or more inert inorganic optical waveguides operatively coupled to at least one of the sensing optical waveguides.

9. The method of claim 8, wherein the inert inorganic optical waveguides are formed before the sensing optical waveguides.

10. A method of detecting an analyte, comprising
providing optical waveguide sensor device, comprising:
a substrate; and
a device layer disposed on the substrate, the device layer comprising
one or more sensing optical waveguides, each sensing optical waveguide having a core formed from a polymer material or an organic/silicate hybrid material responsive to the analyte; and
one or more inert inorganic optical waveguides operatively coupled to at least one of the sensing optical waveguides;
passing an optical signal through at least one of the sensing optical waveguides, the optical signal overlapping the responsive wavelengths of the at least one sensing optical waveguide; and
detecting the optical signal after it emerges from the at least one sensing optical waveguide.
